# EUROPÄISCHE PATENTANMELDUNG

(11) **EP 3 244 113 A1**
(43) Veröffentlichungstag der Anmeldung: **15.11.2017**
(21) Anmeldenummer: 17168618.1
(22) Anmeldetag: 28.04.2017
(51) Int. Cl.: F16L 37/084, F16L 37/086, F16L 37/088, F16L 37/091, F02M 35/10

(54) **VERRIEGELUNGSBÜGEL FÜR EINEN STUTZEN EINES SCHNELLKUPPLUNGSSYSTEMS**

(30) Priorität: 12.05.2016 DE 102016108831
(71) Anmelder: VERITAS AG, 63571 Gelnhausen (DE)
(72) Erfinder: KARI, Artur, 63762 Großostheim (DE)
(74) Vertreter: Patentship Patentanwaltsgesellschaft mbH

(57) **Zusammenfassung**

Die vorliegende Erfindung betrifft einen Verriegelungsbügel (105) für einen Stutzen (100) eines Schnellkupplungssystems, wobei der Stutzen (100) entlang des Umfangs eine erste Aufnahmeschlitzgruppe (113) mit Aufnahmeschlitzen (113-1, 113-2, 113-3) und eine zweite Aufnahmeschlitzgruppe (115) mit Aufnahmeschlitzen (115-1, 115-2, 115-3) aufweist, wobei der Verriegelungsbügel (105) die folgenden Merkmale aufweist, einen zumindest teilweise umlaufenden ersten Bügelabschnitt (105-1) mit einer ersten Vorsprunggruppe (109), welche radial nach innen gerichtete Vorsprünge (109-1, 109-2, 109-3) aufweist, welche vorgesehen sind, in die Aufnahmeschlitze (113-1, 113-2, 113-3) der ersten Aufnahmeschlitzgruppe (113) des Stutzens (100) einzugreifen, einem zumindest teilweise umlaufenden zweiten Bügelabschnitt (105-2) mit einer zweiten Vorsprunggruppe (111), welche radial nach innen gerichtete Vorsprünge (111-1, 111-2, 111-3) aufweist, welche vorgesehen sind, in die Aufnahmeschlitze (115-1, 115-2, 115-3) der zweiten Aufnahmeschlitzgruppe (115) des Stutzens (100) einzugreifen, und einem gebogenen Federabschnitt (105-3), welcher den ersten Bügelabschnitt (105-1) und den zweiten Bügelabschnitt (105-2) verbindet, wobei der gebogene Federabschnitt (105-3) winklig zu der ersten Vorsprunggruppe (109) und der zweiten Vorsprunggruppe (111) angeordnet ist.

## Beschreibung

Die vorliegende Erfindung betrifft einen Verriegelungsbügel für einen Stutzen eines Schnellkupplungssystems, insbesondere einen Verriegelungsbügel für einen Stutzen, in welchen ein Gegenstutzen eines Schnellkupplungssystems einführbar ist.

In einem Kraftfahrzeug wird eine Vielzahl von Fluidleitungen verwendet, um Gase, wie z.B. Luft, oder Flüssigkeiten zu transportieren. Um eine wirksame Anbindung der Fluidleitungen an Bauelemente des Kraftfahrzeuges zu ermöglichen, werden Schnellkupplungssysteme verwendet. Schnellkupplungssysteme können beispielsweise vorteilhaft zur fluidtechnischen Verbindung einer Ladeluftverbindung in einem Kraftfahrzeug verwendet werden. Ein Schnellkupplungssystem umfasst insbesondere einen Stutzen, in welchen ein passender Gegenstutzen eingeführt werden kann, wobei der Stutzen und der Gegenstutzen jeweils mit einer fluidführenden Leitung fluidtechnisch verbunden sind.

Es ist die der Erfindung zugrundeliegende Aufgabe, einen Verriegelungsbügel für einen Stutzen eines Schnellkupplungssystems anzugeben, welcher auf einfache Art und Weise verriegelt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch einen Verriegelungsbügel für einen Stutzen eines Schnellkupplungssystems gelöst, wobei der Stutzen entlang des Umfangs eine erste Aufnahmeschlitzgruppe mit Aufnahmeschlitzen und eine zweite Aufnahmeschlitzgruppe mit Aufnahmeschlitzen aufweist, wobei der Verriegelungsbügel die folgenden Merkmale aufweist, einen zumindest teilweise umlaufenden ersten Bügelabschnitt mit einer ersten Vorsprunggruppe, welche radial nach innen gerichtete Vorsprünge aufweist, welche vorgesehen sind, in die Aufnahmeschlitze der ersten Aufnahmeschlitzgruppe des Stutzens einzugreifen, einen zumindest teilweise umlaufenden zweiten Bügelabschnitt mit einer zweiten Vorsprunggruppe, welche radial nach innen gerichtete Vorsprünge aufweist, welche vorgesehen sind, in die Aufnahmeschlitze der zweiten Aufnahmeschlitzgruppe des Stutzens einzugreifen, und einen gebogenen Federabschnitt, welcher den ersten Bügelabschnitt und den zweiten Bügelabschnitt verbindet, wobei der gebogene Federabschnitt winklig zu der ersten Vorsprunggruppe und der zweiten Vorsprunggruppe angeordnet ist.

Dadurch wird beispielsweise der technische Vorteil erreicht, dass der Verrieglungsbügel eine automatische und stabile Verriegelung des Gegenstutzens an dem Stutzen beim Einführen des Gegenstutzens in den Stutzen ermöglicht.

Durch das Einführen des Gegenstutzens in den Stutzen werden die radial nach innen gerichteten Vorsprünge des Verriegelungsbügels, welche in die Aufnahmeschlitze des Stutzens eingreifen, radial nach außen gedrückt, damit der Gegenstutzen vollständig in den Stutzen eingeführt werden kann. Wenn der Gegenstutzen vollständig in den Stutzen eingeführt wurde, schnappen die radial nach außen gedrückten Vorsprünge in eine an der Außenseite des Gegenstutzens angeordnete umlaufende Nut oder umlaufende Auflagefläche ein, um eine wirksame Verriegelung des eingeführten Gegenstutzens an dem Stutzen sicherzustellen.

Damit ein radiales Aufweiten des Verriegelungsbügels beim Einführen des Gegenstutzens in den Stutzen ermöglicht wird, weist der Verriegelungsbügel einen gebogenen Federabschnitt auf, welcher mit dem ersten und zweiten Bügelabschnitt verbunden ist und zu der ersten und zweiten Vorsprunggruppe winklig, insbesondere rechtwinklig, angeordnet ist. Beim radialen Aufweiten des Verrieglungsbügels durch das Einführen des Gegenstutzens in den Stutzen wird der gebogene Federabschnitt aufgebogen und dabei gespreizt. Wenn der Gegenstutzen vollständig in den Stutzen eingeführt wurde, kehrt der aufgebogene und gespreizte Federabschnitt durch die in dem aufgebogenen Federabschnitt gespeicherte Federkraft wieder in die ursprüngliche Ausganglage zurück, wodurch die radial nach außen gedrückten Vorsprünge des Verriegelungsbügels in die umlaufende Nut oder umlaufende Auflagefläche an dem Gegenstutzen einrasten können.

Somit stellt der Verriegelungsbügel sicher, dass der Gegenstutzen wirksam an dem Stutzen verriegelt werden kann. Da zum Bereitstellen des Schnellkupplungssystems der Verriegelungsbügel nur mit den Vorsprüngen in die Aufnahmeschlitze an dem Stutzen eingeführt werden muss und anschließend der Gegenstutzen nur in den Stutzen mit dem daran befestigten Verriegelungsbügel eingeführt werden muss, gestaltet sich die Montage des Schnellkupplungssystems einfach und damit kostengünstig. Durch die Vielzahl an Vorsprüngen der ersten und zweiten Vorsprunggruppe werden die auf den Verriegelungsbügel während des Gebrauchs des Schnellkupplungssystems wirkenden Kräfte besonders wirksam auf einen Großteil des Umfangs des Verriegelungsbügels verteilt. Dadurch kann bei auftretenden hohen mechanischen Belastungen eine Beschädigung des Verriegelungsbügels verhindert werden.

In einer vorteilhaften Ausführungsform ist der gebogene Federabschnitt als eine Federschlinge, insbesondere als eine Omega-förmig gebogene Federschlinge, ausgebildet.

Dadurch wird beispielsweise der technische Vorteil erreicht, dass ein als eine Federschlinge, insbesondere als eine Omega-förmig gebogene Federschlinge, ausgebildeter gebogener Federabschnitt beim radialen Aufweiten des Verriegelungsbügels durch das Einführen des Gegenstutzens in den Stutzen besonders vorteilhaft aufgebogen und gespreizt werden kann. Dadurch wird eine besonders wirksame automatische Verriegelung des Gegenstutzens an dem Stutzen beim Einführen des Gegenstutzens in den Stutzen sichergestellt.

In einer weiteren vorteilhaften Ausführungsform sind die radial nach innen gerichteten Vorsprünge der ersten und zweiten Vorsprunggruppe durch gebogene Abschnitte des Verriegelungsbügels gebildet.

Dadurch wird beispielsweise der technische Vorteil erreicht, dass die gebogenen Vorsprünge besonders vorteilhaft in die Aufnahmeschlitze an dem Stutzen eingreifen können. Zudem können die gebogenen Vorsprünge des Verriegelungsbügels beim Einführen des Gegenstutzens in den Stutzen besonders vorteilhaft radial nach außen gedrückt werden. Somit rasten die nach außen gedrückten gebogenen Vorsprünge nach dem Einführen des Gegenstutzens in den Stutzen vorteilhaft in eine Nut oder Auflagefläche an dem Gegenstutzen ein.

In einer weiteren vorteilhaften Ausführungsform sind die erste Vorsprunggruppe und die zweite Vorsprunggruppe auf gegenüberliegenden Seiten des Verrieglungsbügels angeordnet.

Dadurch wird beispielsweise der technische Vorteil erreicht, dass beim Einführen eines Gegenstutzens in den Stutzen die auf gegenüberliegenden Seiten des Verrieglungsbügels angeordneten Vorsprünge der ersten und zweiten Vorsprunggruppe von gegenüberliegenden Seiten in eine umlaufende Nut oder Auflagefläche an dem Gegenstutzen eingreifen können. Dadurch wird der Gegenstutzen an dem Stutzen von dem Verriegelungsbügel von beiden Seiten wirksam umgriffen und damit wird der Gegenstutzen besonders vorteilhaft an dem Stutzen fixiert.

In einer weiteren vorteilhaften Ausführungsform weist die erste Vorsprunggruppe einen ersten Vorsprung und einen zweiten Vorsprung auf, welche jeweils in einen ersten Aufnahmeschlitz und einen zweiten Aufnahmeschlitz der ersten Aufnahmeschlitzgruppe eingreifen, und weist die zweite Vorsprunggruppe einen dritten Vorsprung und einen vierten Vorsprung auf, welche jeweils in einen dritten Aufnahmeschlitz und einen vierten Aufnahmeschlitz der zweiten Aufnahmeschlitzgruppe eingreifen.

Dadurch wird beispielsweise der technische Vorteil erreicht, dass durch die beiden Vorsprünge der ersten Vorsprunggruppe und durch die beiden Vorsprünge der zweiten Vorsprunggruppe, welche in die jeweiligen Aufnahmeschlitze der ersten, bzw. zweiten Aufnahmeschlitzgruppe eingreifen eine ausreichend wirksame Fixierung des in den Stutzen eingeführten Gegenstutzens an dem Stutzen des Schnellkupplungssystem sichergestellt werden kann.

In einer weiteren vorteilhaften Ausführungsform weist die erste Vorsprunggruppe einen weiteren ersten Vorsprung auf, welcher in einen weiteren ersten Aufnahmeschlitz der ersten Aufnahmeschlitzgruppe eingreift, und weist die zweite Vorsprunggruppe einen weiteren dritten Vorsprung auf, welcher in einen weiteren dritten Aufnahmeschlitz der zweiten Aufnahmeschlitzgruppe eingreift.

Dadurch wird beispielsweise der technische Vorteil erreicht, dass durch die drei Vorsprünge der ersten Vorsprunggruppe und durch die drei Vorsprünge der zweiten Vorsprunggruppe, welche in die jeweiligen Aufnahmeschlitze der ersten, bzw. zweiten Aufnahmeschlitzgruppe eingreifen der in den Stutzen eingeführte Gegenstutzen besonders wirksam fixiert werden kann. Durch insgesamt sechs Vorsprünge an dem umlaufenden Verriegelungsbügel kann im Gegensatz zu einem Verriegelungsbügel mit z.B. zwei, drei oder vier Vorsprüngen, auch bei höheren mechanischen Belastungen, welche auf das Schnellkupplungssystem einwirken, eine Beschädigung des Verriegelungsbügels verhindert werden.

In einer weiteren vorteilhaften Ausführungsform weist der Verriegelungsbügel zumindest einen Aufweitungsabschnitt auf, welcher zwischen den Vorsprüngen der ersten oder zweiten Vorsprunggruppe angeordnet ist, und ist zwischen dem Aufweitungsabschnitt und dem Stutzen eine Entriegelungsöffnung angeordnet.

Dadurch wird beispielsweise der technische Vorteil erreicht, dass der den Verriegelungsbügel aufweitende Aufweitungsabschnitt ermöglicht, dass zwischen dem Stutzen und dem Aufweitungsabschnitt eine Entriegelungsöffnung gebildet wird. Während eines Entriegelungsvorgangs kann mit einem Werkzeug in die Entriegelungsöffnung eingegriffen werden und der Aufweitungsabschnitt radial nach außen gedrückt werden. Durch das nach außen drücken des Aufweitungsabschnitts werden die mit dem Aufweitungsabschnitt verbundenen Vorsprünge des Verriegelungsbügels aus den jeweiligen Aufnahmeschlitzen an dem Stutzen ebenfalls radial nach außen gedrückt. Dadurch kann der Verriegelungsbügel von dem Stutzen entfernt werden und eine wirksame Entriegelung des Gegenstutzens an dem Stutzen wird ermöglicht.

In einer weiteren vorteilhaften Ausführungsform weist der Verriegelungsbügel einen ersten Endabschnitt auf, welcher auf einer dem gebogenen Federabschnitt abgewandten Seite des Verrieglungsbügels mit dem ersten Bügelabschnitt verbunden ist, und weist der Verriegelungsbügel einen zweiten Endabschnitt auf, welcher auf einer dem gebogenem Federabschnitt abgewandten Seite des Verrieglungsbügel mit dem zweiten Bügelabschnitt verbunden ist.

Dadurch wird beispielsweise der technische Vorteil erreicht, dass durch die Endabschnitte, welche auf der dem gebogenen Federabschnitt abgewandten Seite des Verrieglungsbügels angeordnet sind, der Verriegelungsbügel wirksam an dem Stutzen befestigt werden kann. Die Endabschnitte verhindern, dass sich der Verriegelungsbügel bei einem radialen Aufweiten des Verriegelungsbügels beim Einführen des Gegenstutzens in den Stutzen von dem Stutzen löst.

In einer weiteren vorteilhaften Ausführungsform weist der Stutzen eine Führungsschiene zum Führen des ersten und zweiten Endabschnitts auf, wobei der erste und zweite Endabschnitt insbesondere an einem Führungselement des Stutzens innerhalb der Führungsschiene führbar angeordnet sind.

Dadurch wird beispielsweise der technische Vorteil erreicht, dass die Führungsschiene beim radialen Aufweiten des Verriegelungsbügels beim Einführen des Gegenstutzens in den Stutzen ein geführtes Bewegen der Endabschnitte ermöglicht. Insbesondere können die Endabschnitte des Stutzens an einem Führungselement des Stutzens geführt bewegt werden. Somit kann der Verriegelungsbügel radial aufgeweitet werden und auch wieder radial kontrahiert werden, ohne dass sich die Endabschnitte des Verriegelungsbügels von dem Stutzen lösen.

In einer weiteren vorteilhaften Ausführungsform ist der erste Endabschnitt zwischen einem ersten Arretierungsabschnitt des Verriegelungsbügels und einem ersten Wandungsabschnitt des Stutzens angeordnet, und ist der zweite Endabschnitt zwischen einem zweiten Arretierungsabschnitt des Verriegelungsbügels und einem zweiten Wandungsabschnitt des Stutzens angeordnet.

Dadurch wird beispielsweise der technische Vorteil erreicht, dass durch das Anordnen, bzw. Einklemmen, des jeweiligen Endabschnittes des Verriegelungsbügels zwischen dem jeweiligen Arretierungsabschnitt des Verriegelungsbügels und dem jeweiligen Wandungsabschnitt des Stutzens der jeweilige Endabschnitt wirksam an dem Stutzen fixiert ist. Somit kann der Verriegelungsbügel beim Einführen des Gegenstutzens in den Stutzen radial aufgeweitet werden, ohne dass sich die Endabschnitte des Verriegelungsbügels von dem Stutzen lösen.

In einer weiteren vorteilhaften Ausführungsform weist der Verriegelungsbügel einen ersten gebogenen Abschnitt auf, welcher zwischen dem ersten Endabschnitt und dem ersten Arretierungsabschnitt angeordnet ist, und weist der Verriegelungsbügel einen zweiten gebogenen Abschnitt auf, welcher zwischen dem zweiten Endabschnitt und dem zweiten Arretierungsabschnitt angeordnet ist.

Dadurch wird beispielsweise der technische Vorteil erreicht, dass durch den jeweiligen gebogenen Abschnitt, welcher zwischen dem jeweiligen Arretierungsabschnitt und dem jeweiligen Endabschnitt angeordnet ist, eine besonders wirksame Stabilisierung des Verriegelungsbügels beim radialen Aufweiten des Verriegelungsbügels sichergestellt wird.

In einer weiteren vorteilhaften Ausführungsform weist der Stutzen eine umlaufende Auflagefläche für ein Ende des Gegenstutzens auf, wobei die umlaufende Auflagefläche insbesondere einen Dichtring aufweist.

Dadurch wird beispielsweise der technische Vorteil erreicht, dass der Gegenstutzen bis zu einem Anschlag in den Stutzen eingeführt werden kann und somit wirksam in dem Stutzen aufgenommen werden kann. Der Dichtring stellt eine fluiddichte Verbindung zwischen dem Gegenstutzen und dem Stutzen sicher.

In einer weiteren vorteilhaften Ausführungsform weist der Stutzen eine Aussparung zum Aufnehmen eines Vorsprungelements eines in den Stutzen einführbaren Gegenstutzens auf, wobei die Aussparung insbesondere im Querschnitt rechteckig ist.

Dadurch wird beispielsweise der technische Vorteil erreicht, dass der Gegenstutzen nur in einer bestimmten Orientierung in den Stutzen eingeführt werden kann. Die rechteckige Form der Aussparung stellt sicher, dass der Gegenstutzen nicht innerhalb des Stutzens verdreht werden kann.

In einer weiteren vorteilhaften Ausführungsform ist der Stutzen durch ein Kunststoffformteil oder ein Metallformteil gebildet, oder ist der Verbindungsbügel durch ein Metallformteil gebildet.

Dadurch wird beispielsweise der technische Vorteil erreicht, dass der Stutzen auf einfache Weise in der gewünschten Form hergestellt werden kann und eine ausreichende materialtechnische Stabilität aufweist, bzw. dass die Verwendung eines Metallformteils für den Verbindungsbügel eine ausreichend wirksame Stabilität des Verbindungsbügels bereitstellt.

Gemäß einem zweiten Aspekt der Erfindung wird die Aufgabe durch ein Schnellkupplungssystem gelöst, mit einem Verriegelungsbügel nach dem ersten Aspekt, einem Stutzen, welcher entlang des Umfangs eine erste Aufnahmeschlitzgruppe mit Aufnahmeschlitzen und eine zweite Aufnahmeschlitzgruppe mit Aufnahmeschlitzen aufweist, und einem in den Stutzen einführbaren Gegenstutzen, wobei der Gegenstutzen eine umlaufende Nut oder eine umlaufende Auflagefläche zum Eingreifen der Vorsprünge der ersten und der zweiten Vorsprunggruppe des Verriegelungsbügels aufweist.

Dadurch wird beispielsweise ebenfalls der technische Vorteil erreicht, dass der Gegenstutzen bei einem Einführen in den Stutzen automatisch und besonders vorteilhaft durch den Verriegelungsbügel an dem Stutzen verriegelt wird.

Ausführungsbeispiele der Erfindung sind in den Zeichnungen dargestellt und werden im Folgenden näher beschrieben.

### Es zeigen:

- Fig. 1: eine perspektivische Ansicht eines Stutzens für ein Schnellkupplungssystem mit einem Verriegelungsbügel in Verriegelungsposition gemäß einer Ausführungsform;
- Fig. 2: eine Aufsicht eines Verriegelungsbügels an einem Stutzen eines Schnellkupplungssystems in Verriegelungsposition gemäß einer Ausführungsform; und
- Fig. 3: eine Aufsicht eines Verriegelungsbügels an einem Stutzen eines Schnellkupplungssystems in Verriegelungsposition gemäß einer weiteren Ausführungsform.

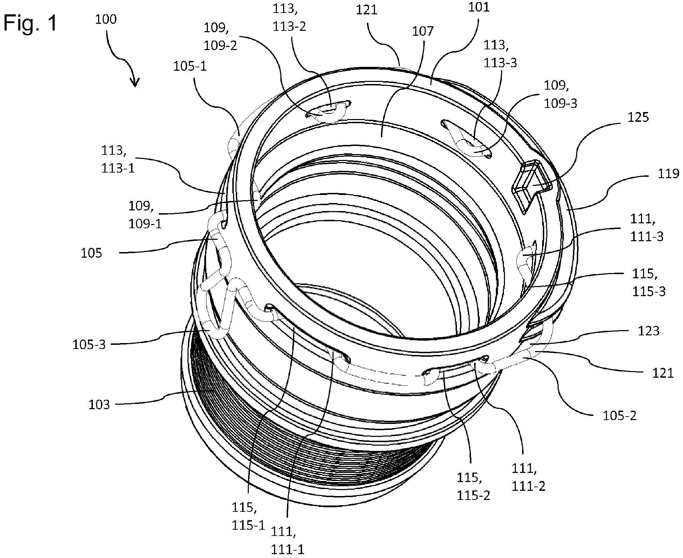

Fig. 1 zeigt eine perspektivische Ansicht eines Stutzens 100 für ein Schnellkupplungssystem mit einem Verriegelungsbügel in Verriegelungsposition, wobei der in den Stutzen eingeführte Gegenstutzen in der Fig. 1 nicht dargestellt ist. Der Stutzen 100 kann beispielsweise für eine Ladeluftverbindung in einem Kraftfahrzeug verwendet werden. Der Stutzen 100 umfasst einen Einführabschnitt 101 zum Einführen des Gegenstutzens und umfasst einen Leitungsabschnitt 103 zum Anschließen einer fluidführenden Leitung an den Stutzen 100. Der Stutzen 100 umfasst ferner einen Verriegelungsbügel 105 zum Verriegeln des in den Stutzen 100 eingeführten Gegenstutzens an dem Stutzen 100. Der in den Stutzen 100 eingeführte Gegenstutzen befindet sich in Kontakt mit einer umlaufenden Auflagefläche 107 im Inneren des Einführabschnittes 101 des Stutzens 100 und liegt mit einem Ende auf der umlaufenden Auflagefläche 107 auf. Durch die umlaufenden Auflagefläche 107 wird ein Einschub des Gegenstutzens in den Einführabschnitt 101 des Stutzens 100 begrenzt. Der Gegenstutzen befindet sich dadurch nach dem Einführen an einer exakt vorgesehenen Position.

Damit eine fluiddichte Verbindung zwischen dem Stutzen 100 und dem Gegenstutzen sichergestellt wird, kann an der umlaufenden Auflagefläche 107 ein Dichtring angeordnet sein, wobei der Dichtring optional auf einer dem Gegenstutzen zugewandten Seite der Auflagefläche 107 angeordnet werden kann. In einer anderen Ausführungsform dient die umlaufende Auflagefläche 107 zur Positionierung des Gegenstutzens an dem Stutzen 100. Der Stutzen 100, bzw. der Gegenstutzen, wird beispielsweise durch ein Kunststoffformteil oder durch ein Metallformteil gebildet.

Der Verriegelungsbügel 105 umfasst einen den Stutzen 100 zumindest teilweise umlaufenden ersten Bügelabschnitt 105-1 und auf der dem ersten Bügelabschnitt 105-1 gegenüberliegenden Seite einen den Stutzen 100 zumindest teilweise umlaufenden zweiten Bügelabschnitt 105-2. Der erste und zweite Bügelabschnitt 105-1, 105-2 sind durch einen gebogenen Federabschnitt 105-3 miteinander verbunden.

Der erste Bügelabschnitt 105-1 weist eine erste Vorsprunggruppe 109 mit einem ersten Vorsprung 109-1, einem zweiten Vorsprung 109-2 und einem weiteren ersten Vorsprung 109-3 auf, welche radial nach innen gerichtet sind. Der zweite Bügelabschnitt 105-2 weist eine zweite Vorsprunggruppe 111 mit einem dritten Vorsprung 111-1, einem vierten Vorsprung 111-2 und einem weiteren dritten Vorsprung 111-3 auf, welche radial nach innen gerichtet sind.

Der erste Vorsprung 109-1, der zweite Vorsprung 109-2 und der weitere erste Vorsprung 109-3 der ersten Vorsprunggruppe 109 ist jeweils in einen ersten Aufnahmeschlitz 113-1, einen zweiten Aufnahmeschlitz 113-2, und einen weiteren ersten Aufnahmeschlitz 113-3 einer ersten Aufnahmeschlitzgruppe 113 eingeführt. Der dritte Vorsprung 111-1, der vierte Vorsprung 111-2 und der weitere dritte Vorsprung 111-3 der zweiten Vorsprunggruppe 111 ist jeweils in einen dritten Aufnahmeschlitz 115-1, einen vierten Aufnahmeschlitz 115-2, und einen weiteren dritten Aufnahmeschlitz 115-3 einer zweiten Aufnahmeschlitzgruppe 115 eingeführt.

Hier sind die radial nach innen gerichteten Vorsprünge 109-1, 109-2, 109-3, 111-1, 111-2 und 111-3 durch gebogene Abschnitte des Verriegelungsbügels 105 gebildet. Die erste Vorsprunggruppe 109 ist auf einer der zweiten Vorsprunggruppe 111 gegenüberliegenden Seite des Verriegelungsbügels 105 angeordnet, um ein wirksames Verriegeln eines in den Stutzen 100 eingeführten Gegenstutzens durch den Verriegelungsbügel 105 zu ermöglichen.

Beim Einführen des Gegenstutzens in den Einführabschnitt 101 des Stutzens 100 werden die Vorsprünge 109-1, 109-2, 109-3, 111-1, 111-2 und 111-3 zunächst radial nach außen gedrückt und rasten dann federnd in einer umlaufenden Nut oder an einer umlaufenden Auflagefläche des Gegenstutzens ein. Die Nut oder die Auflagefläche des Gegenstutzens befindet sich in der gleichen Tiefe des Stutzens 100 wie die Vorsprünge 109-1, 109-2, 109-3, 111-1, 111-2 und 111-3. Durch das Einfedern der Vorsprünge 109-1, 109-2, 109-3, 111-1, 111-2 und 111-3 wird der Gegenstutzen wirksam an dem Stutzen 100 arretiert.

Damit die Vorsprünge 109-1, 109-2, 109-3, 111-1, 111-2 und 111-3 wirksam radial nach außen gedrückt werden können, um anschließend wirksam an dem Gegenstutzen einrasten zu können, weist die Verriegelungsbügel 105 einen gebogenen Federabschnitt 105-3 auf, welcher den ersten Bügelabschnitt 105-1 mit dem zweiten Bügelabschnitt 105-2 verbindet, und winklig, insbesondere rechtwinklig, zu der ersten Vorsprunggruppe 109 und der zweiten Vorsprunggruppe 111 angeordnet ist. Der gebogenen Federabschnitt 105-3 ist als eine Federschlinge, insbesondere als eine Omega-förmig gebogene Federschlinge ausgebildet.

Beim Einführen des Gegenstutzens in den Stutzen 100 und dem radial nach außen drücken der Vorsprünge 109-1, 109-2, 109-3, 111-1, 111-2 und 111-3 wird der gebogene Federabschnitt 105-3 aufgebogen und gespreizt, wodurch eine Aufweitung des gesamten Verriegelungsbügels 105 ermöglicht wird, um ein wirksames Einführen des Gegenstutzens in den Stutzen 100 sicherzustellen. Anschließend federn der erste und zweite Bügelarm 109-1 und 109-2 wieder zurück und die Vorsprünge 109-1, 109-2, 109-3, 111-1, 111-2 und 111-3 rasten federnd in einer umlaufenden Nut oder an einer umlaufenden Auflagefläche des Gegenstutzens ein, um eine wirksame Verriegelung des Gegenstutzens an dem Stutzen 100 sicherzustellen.

Der Verriegelungsbügel 105 ist beispielsweise aus einem Metallformteil, insbesondere als ein gebogener Runddraht, gebildet.

Die Verriegelungsbügel 105 weist ferner einen ersten und zweiten Endabschnitt 117-1, 117-2 auf, welche in Fig. 1 nicht dargestellt sind, da sie sich innerhalb einer Führungsschiene 119 befinden, wobei die Führungsschiene 119 außerhalb des Einführabschnittes 101 des Stutzens 100 angeordnet ist. Die Führungsschiene 119 ist ausgebildet, den ersten und zweiten Endabschnitt 117-1, 117-2 beim nach außen drücken der jeweiligen Vorsprünge 109-1, 109-2, 109-3, 111-1, 111-2 und 111-3 durch das Einführen des Gegenstutzens in den Stutzen 100 geführt zu bewegen, wodurch verhindert werden kann, dass sich der erste und zweite Endabschnitt 117-1, 117-2 von dem Stutzen 100 lösen.

Der Verriegelungsbügel 105 weist einen Aufweitungsabschnitt 121 auf, welcher zwischen dem zweiten und weiteren ersten Vorsprung 109-2, 109-3 angeordnet ist, und weist einen Aufweitungsabschnitt 121 auf, welcher zwischen dem vierten und weiteren dritten Vorsprung 111-2, 111-3 angeordnet ist. Zwischen dem jeweiligen Aufweitungsabschnitt 121 und dem Stutzen 100 ist jeweils eine Entriegelungsöffnung 123 angeordnet. Wenn der Gegenstutzen an dem Stutzen 100 verriegelt ist, kann mit einem Werkzeug in eine der Entriegelungsöffnungen 123 eingegriffen werden, um den jeweiligen Aufweitungsabschnitt 121 nach außen zu drücken und den Verriegelungsbügel 105 manuell nach außen radial aufzuweiten. Durch das Aufweiten des Verriegelungsbügels 105 an der Entriegelungsöffnung 123 greifen die jeweiligen Vorsprünge 109-1, 109-2, 109-3, 111-1, 111-2 und 111-3 nicht mehr in die umlaufende Nut oder an die umlaufenden Auflagefläche des Gegenstutzens ein, wodurch der Gegenstutzen entriegelt wird und von dem Stutzen 100 entfernt werden kann.

Der Einführabschnitt 101 des Stutzens 100 umfasst ferner eine Aussparung 125 in Einführrichtung des Gegenstutzens zum Aufnehmen eines komplementären Vorsprungelements des Gegenstutzens. Durch wird erreicht, dass der Gegenstutzen nur in einer vorgesehenen Orientierung in den Einführabschnitt 101 des Stutzens 100 eingeführt werden kann. Die Aussparung 125 weist im Querschnitt eine rechteckige Form auf.

Durch den Verriegelungsbügel 105 wird ein kompaktes, bauraumoptimiertes Schnellkupplungssystem zur vorteilhafte Montage und Demontage eines Gegenstutzens an einem Stutzen 100 realisiert. Da der Verriegelungsbügel 105 zur Montage des Gegenstutzens an dem Stutzen 100 nicht demontiert werden muss und sich stets im verriegelungsfähigen Zustand befindet, können Fehlbedienungen bei der Montage des Schnellkupplungssystems ausgeschlossen werden.

Das lediglich drei Teile, nämlich Stutzen 100, Verriegelungsbügel 105 und Gegenstutzen, umfassende Schnellkupplungssystem zeichnet sich durch eine besonders kompakte Bauform aus und kann direkt in ein Kunststoffrohr integriert werden, beispielsweise mittels Spritzgießens. Durch den Stutzen 100 und den Verriegelungsbügel 105 des Schnellkupplungssystems werden somit gleichzeitig die Montagesicherheit verbessert, eine Montage ohne Werkzeug ermöglicht, und eine geringe Anzahl von Einzelteilen und eine kompakte Bauform realisiert.

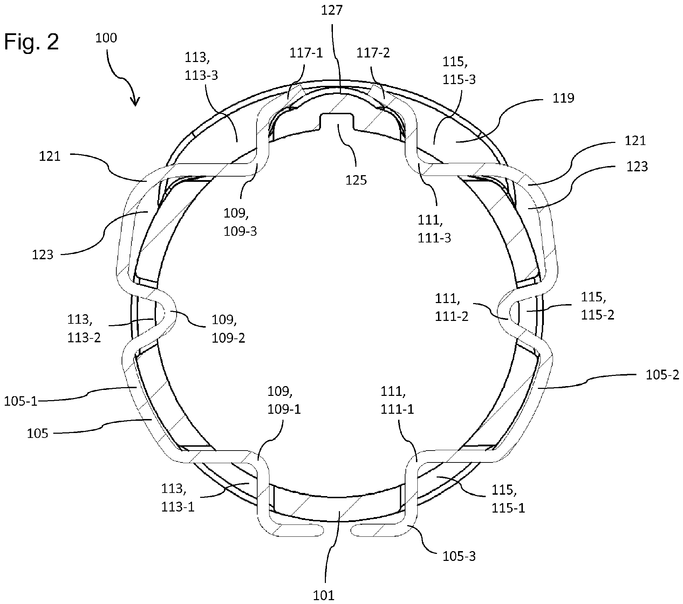

Fig. 2 zeigt eine Aufsicht eines Verriegelungsbügels an einem Stutzen eines Schnellkupplungssystems in Verriegelungsposition gemäß einer Ausführungsform. Der in den Stutzen 100 eingeführte Gegenstutzen ist in Fig. 2 nicht dargestellt. In der Verriegelungsposition sind der erste, zweite und weitere erste Vorsprung 109-1, 109-2, 109-3 der ersten Vorsprunggruppe 109 des ersten Bügelabschnitts 105-1, sowie der dritte, vierte und weitere dritte Vorsprung 111-1, 111-2 und 111-3 der zweiten Vorsprunggruppe 111 des zweiten Bügelabschnitts 105-2 auf gegenüberliegenden Seiten des Verriegelungsbügels 105 zueinander angeordnet. Die Vorsprünge 109-1, 109-2, 109-3, 111-1, 111-2 und 111-3 sind in der Verriegelungsposition jeweils in einem ersten, zweiten und weiteren ersten Aufnahmeschlitz 113-1, 113-2, 113-3 der ersten Aufnahmeschlitzgruppe 113 und in einem dritten, vierten, und weiteren dritten Aufnahmeschlitz 115-1, 115-2, 115-3 der zweiten Aufnahmeschlitzgruppe 115 angeordnet.

Beim Einführen des Gegenstutzens in den Einführabschnitt 101 des Stutzens 100 werden die Vorsprünge 109-1, 109-2, 109-3, 111-1, 111-2 und 111-3 radial nach außen gedrückt, wodurch der Verriegelungsbügel 105 aufgebogen wird und federn anschließend in eine Nut oder eine Auflagefläche des Gegenstutzens ein. Der Gegenstutzen kann dann auch bei einem Ziehen in axialer Richtung nicht von dem Stutzen 100 gelöst werden.

Beim Einführen des Gegenstutzens in den Stutzen 100 und dem radialen nach außen drücken der Vorsprünge 109-1, 109-2, 109-3, 111-1, 111-2 und 111-3 wird ein gebogener Federabschnitt 105-3 des Verriegelungsbügels 105, welcher den ersten Bügelabschnitt 105-1 und den zweiten Bügelabschnitt 105-2 verbindet, gespreizt, wodurch eine Aufweitung des gesamten Verriegelungsbügels 105 ermöglicht wird, um ein wirksames Einführen des Gegenstutzens in den Stutzen 100 zu ermöglichen.

Die Verriegelungsbügel 105 weist ferner einen ersten und zweiten Endabschnitt 117-1, 117-2 auf, welche innerhalb einer Führungsschiene 119 angeordnet sind, wobei sich die Führungsschiene 119 außerhalb des Einführabschnittes 101 des Stutzens 100 befindet. Die Führungsschiene 119 ist ausgebildet, den ersten und zweiten Endabschnitt 117-1, 117-2 beim einem radialen nach außen drücken der jeweiligen Vorsprünge 109-1, 109-2, 109-3, 111-1, 111-2 und 111-3 durch das Einführen des Gegenstutzens in den Stutzen 100 geführt zu bewegen, wodurch verhindert werden kann, dass sich der erste und zweite Endabschnitt 117-1, 117-2 von dem Stutzen 100 lösen. Der erste und zweite Endabschnitt 117-1, 117-2 liegen hierbei insbesondere an einem Führungselement 127 an, welches an einer Außenseite des Einführabschnitts 101 angeordnet ist. Beim nach Außen drücken der jeweiligen Vorsprünge 109-1, 109-2, 109-3, 111-1, 111-2 und 111-3 werden der erste und zweite Endabschnitt 117-1, 117-2 hierbei an dem Führungselement 127 geführt bewegt, um ein Herausrutschen des Verriegelungsbügels 105 aus der Führungsschiene 119 zu verhindern.

Zwischen zwei Aufweitungsabschnitten 121 des Verriegelungsbügels 105 und dem Stutzen 100 ist jeweils eine Entriegelungsöffnung 123 angeordnet. Wenn bei einem Demontagevorgang des Schnellkupplungssystems mit einem Werkzeug in eine oder in beide der Entriegelungsöffnungen 123 eingegriffen wird, kann der Verriegelungsbügel 105 nach außen gedrückt werden und die Aufweitungsabschnitte 121 können weiter aufgeweitet werden. Durch das Aufweiten der Aufweitungsabschnitte 121 greifen die jeweiligen Vorsprünge 109-1, 109-2, 109-3, 111-1, 111-2 und 111-3 nicht mehr in die umlaufende Nut oder in die umlaufende Auflagefläche des Gegenstutzens ein, wodurch der Gegenstutzen entriegelt wird und von dem Stutzen 100 entfernt werden kann.

Der Einführabschnitt 101 des Stutzens 100 umfasst ferner eine Aussparung 125 in Einführrichtung des Gegenstutzens zum Aufnehmen eines komplementären Vorsprungelements des Gegenstutzens. Durch wird erreicht, dass der Gegenstutzen nur in einer vorgesehenen Orientierung in den Einführabschnitt 101 eingeführt werden kann. Die Aussparung 125 weist im Querschnitt eine rechteckige Form auf.

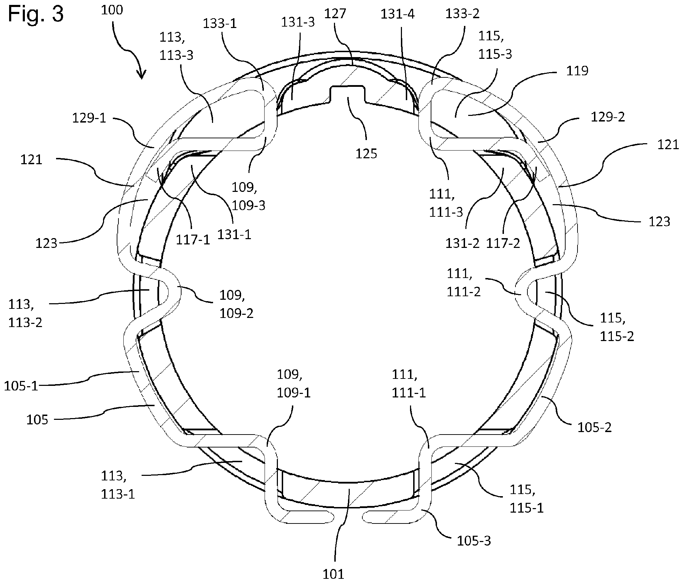

Fig. 3 zeigt eine Aufsicht eines Verriegelungsbügels an einem Stutzen eines Schnellkupplungssystems in einer Verriegelungsposition gemäß einer weiteren Ausführungsform. Der Gegenstutzen ist in Fig. 3 nicht dargestellt. Der Verriegelungsbügel 105 weist einen ersten, zweiten und weiteren ersten Vorsprung 109-1, 109-2, 109-3 der ersten Vorsprunggruppe 109 des ersten Bügelabschnitts 105-1 auf, sowie einen dritten, vierten und weiteren dritten Vorsprung 111-1, 111-2 und 111-3 der zweiten Vorsprunggruppe 111 des zweiten Bügelabschnitts 105-2 auf, welcher auf gegenüberliegenden Seiten des Verriegelungsbügels 105 zueinander angeordnet sind. Die Vorsprünge 109-1, 109-2, 109-3, 111-1, 111-2 und 111-3 sind in der Verriegelungsposition jeweils in einem ersten, zweiten und weiteren ersten Aufnahmeschlitz 113-1, 113-2, 113-3 der ersten Aufnahmeschlitzgruppe 113 und in einem dritten, vierten, und weiteren dritten Aufnahmeschlitz 115-1, 115-2, 115-3 der zweiten Aufnahmeschlitzgruppe 115 angeordnet.

Beim Einführen des Gegenstutzens in den Einführabschnitt 101 werden die Vorsprünge 109-1, 109-2, 109-3, 111-1, 111-2 und 111-3 radial nach außen gedrückt und federn dann in eine Nut oder eine Auflagefläche des Gegenstutzens ein, um den Gegenstutzen wirksam an dem Stutzen 100 zu fixieren.

Beim Einführen des Gegenstutzens in den Stutzen 100 und dem nach Außen drücken der Vorsprünge 109-1, 109-2, 109-3, 111-1, 111-2 und 111-3 wird ein gebogener Federabschnitt 105-3 des Verriegelungsbügels 105 aufgebogen und gespreizt. Das Spreizen des gebogenen Federabschnitts 105-3 stellt eine Aufweitung des gesamten Verriegelungsbügels 105 sicher, wodurch der Gegenstutzen wirksam in den Stutzen 100 eingeführt und anschließend fixiert werden kann.

Die Verriegelungsbügel 105 weist ferner einen ersten und zweiten Endabschnitt 117-1, 117-2 auf. Der erste Endabschnitt 117-1 ist zwischen einem ersten Arretierungsabschnitt 129-1 des Verriegelungsbügels 105 und einem ersten Wandungsabschnitt 131-1 des Stutzens 100 angeordnet. Der zweite Endabschnitt 117-2 ist zwischen einem zweiten Arretierungsabschnitt 129-2 des Verriegelungsbügels 105 und einem zweiten Wandungsabschnitt 131-2 des Stutzens 100 angeordnet.

Wenn der Gegenstutzen in den Stutzen 100 eingeführt wird, dann werden die jeweiligen Vorsprünge 109-1, 109-2, 109-3, 111-1, 111-2 und 111-3 radial nach außen gedrückt. Dadurch, dass der erste und zweite Endabschnitt 117-1, 117-2 zwischen den Arretierungsabschnitten 129-1, 129-2 des Verriegelungsbügels 105 und den Wandungsabschnitten 131-1, 131-2 des Stutzens 100 angeordnet sind, sind die Endabschnitte 117-1, 117-2 an dem Stutzen 100 fixiert und können nicht bewegt werden. Somit kann verhindert werden, dass sich der erste und zweite Endabschnitt 117-1, 117-2 von dem Stutzen 100 lösen.

Der Verriegelungsbügel 105 weist ferner einen ersten gebogenen Abschnitt 133-1 auf, welcher sich von dem ersten Arretierungsabschnitt 129-1 zu dem ersten Endabschnitt 117-1 erstreckt, und weist einen zweiten gebogenen Abschnitt 133-2 auf, welcher sich von dem zweiten Arretierungsabschnitt 129-2 zu dem zweiten Endabschnitt 117-2 erstreckt. Der erste gebogene Abschnitt 133-1 liegt an einem dritten Wandungsabschnitt 131-3 des Stutzens 100 an. Der zweite gebogene Abschnitt 133-2 liegt an einem vierten Wandungsabschnitt 131-4 des Stutzens 100 an. Bei einem nach außen drücken der Vorsprünge 109-1, 109-2, 109-3, 111-1, 111-2 und 111-3 kann ein Herausrutschen des Verriegelungsbügels 105 aus dem Stutzen 100 verhindert werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Stutzen
- 101: Einführabschnitt
- 103: Leitungsabschnitt
- 105: Verriegelungsbügel
- 105-1: Erster Bügelabschnitt
- 105-2: Zweiter Bügelabschnitt
- 105-3: Gebogener Federabschnitt
- 107: Umlaufende Auflagefläche des Stutzens
- 109: Erste Vorsprunggruppe
- 109-1: Erster Vorsprung
- 109-2: Zweiter Vorsprung
- 109-3: Weiterer erster Vorsprung
- 111: Zweite Vorsprunggruppe
- 111-1: Dritter Vorsprung
- 111-2: Vierter Vorsprung
- 111-3: Weiterer dritter Vorsprung
- 113: Erste Aufnahmeschlitzgruppe
- 113-1: Erster Aufnahmeschlitz
- 113-2: Zweiter Aufnahmeschlitz
- 113-3: Weiterer erster Aufnahmeschlitz
- 115: Zweite Aufnahmeschlitzgruppe
- 115-1: Dritter Aufnahmeschlitz
- 115-2: Vierter Aufnahmeschlitz
- 115-3: Weiterer dritter Aufnahmeschlitz
- 117-1: Erster Endabschnitt
- 117-2: Zweiter Endabschnitt
- 119: Führungsschiene
- 121: Aufweitungsabschnitt
- 123: Entriegelungsöffnung
- 125: Aussparung
- 127: Führungselement
- 129-1: Erster Arretierungsabschnitt
- 129-2: Zweiter Arretierungsabschnitt
- 131-1: Erster Wandungsabschnitt
- 131-2: Zweiter Wandungsabschnitt
- 131-3: Dritter Wandungsabschnitt
- 131-4: Vierter Wandungsabschnitt
- 133-1: Erster gebogener Abschnitt
- 133-2: Zweiter gebogener Abschnitt

## Patentansprüche

1. Verriegelungsbügel (105) für einen Stutzen (100) eines Schnellkupplungssystems, wobei der Stutzen (100) entlang des Umfangs eine erste Aufnahmeschlitzgruppe (113) mit Aufnahmeschlitzen (113-1, 113-2, 113-3) und eine zweite Aufnahmeschlitzgruppe (115) mit Aufnahmeschlitzen (115-1, 115-2, 115-3) aufweist, wobei der Verriegelungsbügel (105) die folgenden Merkmale aufweist:
einen zumindest teilweise umlaufenden ersten Bügelabschnitt (105-1) mit einer ersten Vorsprunggruppe (109), welche radial nach innen gerichtete Vorsprünge (109-1, 109-2, 109-3) aufweist, welche vorgesehen sind, in die Aufnahmeschlitze (113-1, 113-2, 113-3) der ersten Aufnahmeschlitzgruppe (113) des Stutzens (100) einzugreifen;
einen zumindest teilweise umlaufenden zweiten Bügelabschnitt (105-2) mit einer zweiten Vorsprunggruppe (111), welche radial nach innen gerichtete Vorsprünge (111-1, 111-2, 111-3) aufweist, welche vorgesehen sind, in die Aufnahmeschlitze (115-1, 115-2, 115-3) der zweiten Aufnahmeschlitzgruppe (115) des Stutzens (100) einzugreifen; und
einen gebogenen Federabschnitt (105-3), welcher den ersten Bügelabschnitt (105-1) und den zweiten Bügelabschnitt (105-2) verbindet, wobei der gebogene Federabschnitt (105-3) winklig zu der ersten Vorsprunggruppe (109) und der zweiten Vorsprunggruppe (111) angeordnet ist.

2. Verriegelungsbügel (105) nach Anspruch 1, wobei der gebogene Federabschnitt (105-3) als eine Federschlinge, insbesondere als eine Omega-förmig gebogene Federschlinge, ausgebildet ist.

3. Verriegelungsbügel (105) nach Anspruch 1 oder 2, wobei die radial nach innen gerichteten Vorsprünge (109-1, 109-2, 109-3, 111-1, 111-2, 111-3) der ersten und zweiten Vorsprunggruppe (109, 111) durch gebogene Abschnitte des Verriegelungsbügels (105) gebildet sind.

4. Verriegelungsbügel (105) nach einem der vorangehenden Ansprüche, wobei die erste Vorsprunggruppe (109) und die zweite Vorsprunggruppe (111) auf gegenüberliegenden Seiten des Verrieglungsbügels (105) angeordnet sind.

5. Verriegelungsbügel (105) nach einem der vorangehenden Ansprüche, wobei die erste Vorsprunggruppe (109) einen ersten Vorsprung (109-1) und einen zweiten Vorsprung (109-2) aufweist, welche jeweils in einen ersten Aufnahmeschlitz (113-1) und einen zweiten Aufnahmeschlitz (113-2) der ersten Aufnahmeschlitzgruppe (113) eingreifen, und wobei die zweite Vorsprunggruppe (111) einen dritten Vorsprung (111-1) und einen vierten Vorsprung (111-2) aufweist, welche jeweils in einen dritten Aufnahmeschlitz (115-1) und einen vierten Aufnahmeschlitz (115-2) der zweiten Aufnahmeschlitzgruppe (115) eingreifen.

6. Verriegelungsbügel (105) nach Anspruch 5, wobei die erste Vorsprunggruppe (109) einen weiteren ersten Vorsprung (109-3) aufweist, welcher in einen weiteren ersten Aufnahmeschlitz (113-3) der ersten Aufnahmeschlitzgruppe (113) eingreift, und wobei die zweite Vorsprunggruppe (111) einen weiteren dritten Vorsprung (111-3) aufweist, welcher in einen weiteren dritten Aufnahmeschlitz (115-3) der zweiten Aufnahmeschlitzgruppe (115) eingreift.

7. Verriegelungsbügel (105) nach einem der vorangehenden Ansprüche, wobei der Verriegelungsbügel (105) zumindest einen Aufweitungsabschnitt (121) aufweist, welcher zwischen den Vorsprüngen (109-1, 109-2, 109-3, 111-1, 111-2, 111-3) der ersten oder zweiten Vorsprunggruppe (109, 111) angeordnet ist, und wobei zwischen dem Aufweitungsabschnitt (121) und dem Stutzen (100) eine Entriegelungsöffnung (123) angeordnet ist.

8. Verriegelungsbügel (105) nach einem der vorangehenden Ansprüche, wobei der Verriegelungsbügel (105) einen ersten Endabschnitt (117-1) aufweist, welcher auf einer dem gebogenen Federabschnitt (105-3) abgewandten Seite des Verrieglungsbügels (105) mit dem ersten Bügelabschnitt (105-1) verbunden ist, und wobei der Verriegelungsbügel (105) einen zweiten Endabschnitt (117-2) aufweist, welcher auf einer dem gebogenem Federabschnitt (105-3) abgewandten Seite des Verrieglungsbügels (105) mit dem zweiten Bügelabschnitt (105-2) verbunden ist.

9. Verriegelungsbügel (105) nach Anspruch 8, wobei der Stutzen (100) eine Führungsschiene (119) zum Führen des ersten und zweiten Endabschnitts (117-1, 117-2) aufweist, wobei der erste und zweite Endabschnitt (117-1, 117-2) insbesondere an einem Führungselement (127) des Stutzens (100) innerhalb der Führungsschiene (119) führbar angeordnet sind.

10. Verriegelungsbügel (105) nach einem der vorangehenden Ansprüche 1 bis 8, wobei der erste Endabschnitt (117-1) zwischen einem ersten Arretierungsabschnitt (129-1) des Verriegelungsbügels (105) und einem ersten Wandungsabschnitt (131-1) des Stutzens (100) angeordnet ist, und wobei der zweite Endabschnitt (117-2) zwischen einem zweiten Arretierungsabschnitt (129-2) des Verriegelungsbügels (105) und einem zweiten Wandungsabschnitt (131-2) des Stutzens (100) angeordnet ist.

11. Verriegelungsbügel (105) nach Anspruch 10, wobei der Verriegelungsbügel (105) einen ersten gebogenen Abschnitt (133-1) aufweist, welcher zwischen dem ersten Endabschnitt (117-1) und dem ersten Arretierungsabschnitt (129-1) angeordnet ist, und wobei der Verriegelungsbügel (105) einen zweiten gebogenen Abschnitt (133-2) aufweist, welcher zwischen dem zweiten Endabschnitt (117-2) und dem zweiten Arretierungsabschnitt (129-2) angeordnet ist.

12. Verriegelungsbügel (105) nach einem der vorangehenden Ansprüche, wobei der Stutzen (100) eine umlaufende Auflagefläche (107) für ein Ende des Gegenstutzens aufweist, wobei die umlaufende Auflagefläche (107) insbesondere einen Dichtring aufweist.

13. Verriegelungsbügel (105) nach einem der vorangehenden Ansprüche, wobei der Stutzen (100) eine Aussparung (125) zum Aufnehmen eines Vorsprungelements eines in den Stutzen (100) einführbaren Gegenstutzens aufweist, wobei die Aussparung (125) insbesondere im Querschnitt rechteckig ist.

14. Verriegelungsbügel (105) nach einem der vorangehenden Ansprüche, wobei der Stutzen (100) durch ein Kunststoffformteil oder ein Metallformteil gebildet ist, oder wobei der Verbindungsbügel (105) durch ein Metallformteil gebildet ist.

15. Schnellkupplungssystem mit einem Verriegelungsbügel (105) nach einem der Ansprüche 1 bis 14, einem Stutzen (100), welcher entlang des Umfangs eine erste Aufnahmeschlitzgruppe (113) mit Aufnahmeschlitzen (113-1, 113-2, 113-3) und eine zweite Aufnahmeschlitzgruppe (115) mit Aufnahmeschlitzen (115-1, 115-2, 115-3) aufweist, und einem in den Stutzen (100) einführbaren Gegenstutzen, wobei der Gegenstutzen eine umlaufende Nut oder eine umlaufende Auflagefläche zum Eingreifen der Vorsprünge (109-1, 109-2, 109-3, 111-1, 111-2, 111-3) der ersten und der zweiten Vorsprunggruppe (109, 111) des Verriegelungsbügels (105) aufweist.
